# EUROPÄISCHE PATENTSCHRIFT

(11) **EP 1 722 441 B1**
(45) Veröffentlichungstag und Bekanntmachung des Hinweises auf die Patenterteilung: **25.07.2007**
(21) Anmeldenummer: 05291007.2
(22) Anmeldetag: 10.05.2005
(51) Int. Cl.: H01R 4/44, H01R 4/60, H01R 11/07

(54) **Anordnung zum elektrisch leitenden Verbinden von Schaltfeldem einer Mittelspannungsanlage**
Arrangement for electrically connecting medium voltage switch gear
Ensemble de connexion électrique de cellules de commutation moyenne tension

(43) Veröffentlichungstag der Anmeldung: 15.11.2006
(73) Patentinhaber: Nexans, 75008 Paris (FR)
(72) Erfinder: Baesch, Manfred, 46049 Oberhausen (DE); Agwuegbo, Obi Robert, Dipl.-Ing., 44287 Dortmund (DE); Markgraf, Volker, 95195 Röslau (DE)
(74) Vertreter: Döring, Roger

(56) Entgegenhaltungen:
- DE-B- 2 019 096
- FR-A- 2 662 846
- US-B1- 6 310 292

## Beschreibung

Die Erfindung bezieht sich auf eine Anordnung zum elektrisch leitenden Verbinden von Schaltfeldern einer Mittelspannungsanlage, bei welcher aus jedem Schaltteld eine elektrische Kontaktfläche herausgeführt ist gemäß dem Oberbegriff des Patentanspruchs 1 (Prospekt der Siemens AG "Siemens HA 35.41, 2003 - Components").

Derartige Anordnungen werden beispielsweise in Umspannstationen von Verteilernetzen oder bei Großkunden von EVUs eingesetzt. In den zu verbindenden Schaltfeldern sind Schalter enthalten, die zum Einschalten und zum Unterbrechen von Übertragungsstrecken dienen. In Abhängigkeit von der Höhe der zu übertragenden - und damit auch zu schaltenden - Spannung, werden die Schalter in Luft oder unter SF₆₋Schutzgas betrieben. Sie sind in der Regel jeweils in einem Gehäuse angeordnet, aus dem ein elektrisch leitender Kontakt herausgeführt ist. Zwei bzw. jeweils zwei derart aufgebaute Schaltfelder werden über Sammelschienen miteinander verbunden, welche an die jeweiligen Kontakte der Schaltfelder angeschlossen werden. Die Länge solcher Sammelschienen kann zwischen 0.2 m und 1,5 m liegen. Sie müssen bei modernen Anlagen, die mit Spannungen von bis zu 36 kV betrieben werden, Ströme mit einer Stromstärke von bis zu 1500 A führen können. In bekannter Technik werden als Sammelschienen Kupferstangen mit kreisförmigem Querschnitt eingesetzt, die eine Isolierung aus Silikongummi oder aus einem Ethylen-Propylen-Terpolymer (EPDM) aufweisen, welche auf beiden Seiten mit elektrisch leitfähigem Material beschichtet ist. Die Herstellung dieser Kupferstangen ist aufwendig. Die Dokumente FR 2662846, DE 2019096 und US 6310292 sind in den Stand der Technik eingeschlossen.

Der Erfindung liegt die Aufgabe zugrunde, die eingangs geschilderte Anordnung so zu gestalten, daß sie bei vereinfachtem Aufbau kostengünstiger gestaltet werden kann, verbunden mit einer sicheren elektrischen Durchverbindung.

Diese Aufgabe wird gemäß den kennzeichnenden Merkmalen des Patentanspruchs 1 gelöst.

Durch die Verwendung von Abschnitten eines Mittelspannungskabels mit Aluminiumleiter kann die Anordnung wesentlich einfacher und kostengünstiger gestaltet werden. Das Mittelspannungskabel kann in herkömmlicher Technik mit allen erforderlichen, den Aluminiumleiter umgebenden Schichten kontinuierlich gefertigt werden. Zur Herstellung einer Sammelschiene braucht nur eine vorgegebene Länge von dem Mittelkabel abgeschnitten zu werden. An den Enden dieser Länge wird der Aluminiumleiter dann so weit freigelegt, wie das für eine Anbringung der Halbschalen des Klemmkörpers erforderlich ist. Zwei solche Sammelschienen können dann mittels des Klemmkörpers ohne weitere Arbeiten elektrisch leitend durchverbunden werden. Es sind insbesondere keine weiteren Arbeiten an den Sammelschienen selbst erforderlich. Durch die spitzen Vorsprünge der Halbschalen ist außerdem auf einfache Weise eine hohe Kontaktsichcrheit mit geringem Übergangswiderstand sichergestellt, da die parallel zueinander angeordneten Vorsprünge in den jeweiligen Aluminiumleiter eindringen. Die Schraubverbindung sorgt außerdem dafür, daß die Halbschalen nicht nur dicht und fest am jeweiligen Aluminlumleiter anliegen, sondern es wird gleichzeitig eine der Halbschalen fest an den Kontakt des entsprechenden Schaltfeldes gepreßt, so daß auch an dieser Stelle eine Kontaktierung mit geringem Übergangswiderstand erreicht ist.

Wenn eine Sammelschiene mit Aluminiumleiter an eine vorzugsweise bereits montierte Sammelschiene mit Kupferstange angeschlossen werden soll, deren Durchmesser kleiner als der Durchmesser des Aluminiumleiters ist, kann zum Ausgleich der Durchmesserunterschiede auf die Kupferstange ein metallischer Ring aufgesetzt werden. Der Ring kann an seiner äußeren Umfangsfläche auf seiner ganzen axialen Breite mehrere, in Umfangsrichtung umlaufende Rillen haben. Er kann außerdem einen axial durchgehenden Schlitz aufweisen. Beim Festziehen der Verschraubung der Halbschalen dringen deren Vorsprünge in die Rillen des Rings ein und der Ring wird fest auf die Kupferstange gepreßt.

Ausführungsbeispiele des Erfindungsgegenstandes sind in den Zeichnungen dargestellt

Es zeigen:
Fig. 1 in schematischer Darstellung eine Anordnung mit zwei Schaltfeldern.
Fig. 2 eine Einzelheit aus Fig. 1 in vergrößerter Darstellung.
Fig. 3 die Anordnung nach der Erfindung im Schnitt in ebenfalls vergrößerter Darstellung.
Fig. 4 und 5 zwei unterschiedliche Ansichten einer in der Anordnung verwendbaren Halbschale in weiter vergrößerter Darstellung.
Fig. 6 eine gegenüber Fig. 3 abgewandelte Ausführungsform der Anordnung ebenfalls im Schnitt.
Fig. 7 eine Darstellung der Einzelteile der Anordnung nach Fig. 6 vor ihrem Zusammenbau.

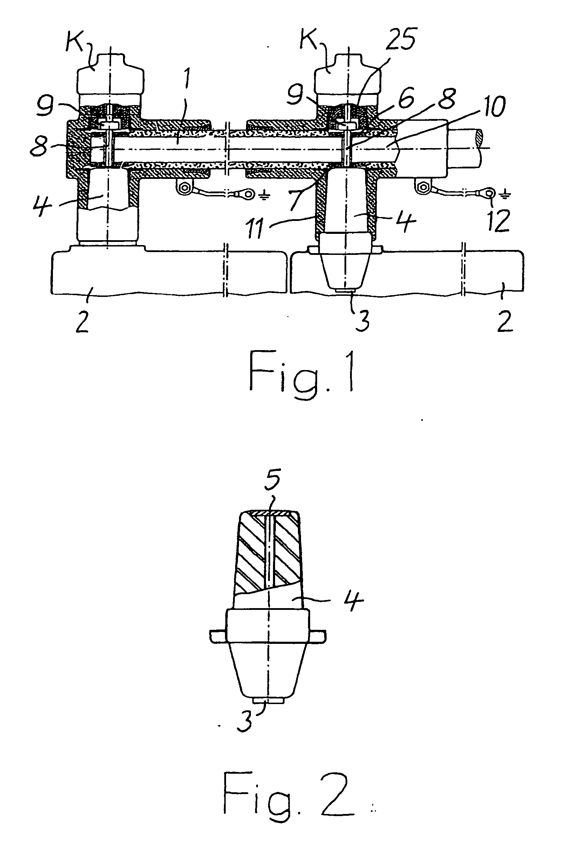

In Fig. 1 sind schematisch zwei Schaltfelder einer Mittelspannungsanlage dargestellt, die mittels einer Sammelschiene 1 elektrisch leitend miteinander verbunden sind. Die nicht mit dargestellten Schalter der Schaltfelder sind in Kesseln 2 angeordnet, aus denen elektrische Kontakte 3 herausgeführt sind. Die Kessel 2 können mit SF₆ als Schutzgas gefüllt sein, insbesondere wenn bei höheren Spannungen geschaltet werden soll. Die Kontakte 3 sind von Isolierkörpern 4 umgeben. Sie enden an deren freier Stirnseite in einer Kontaktfläche 5 (Fig. 2).

An den Enden der Sammelschiene 1 sind aus zwei Halbschalen 6 und 7 bestehende Klemmkörper angebracht, die mittels einer in die Kontaktfläche 5 eingeschraubten Gewindestange 8 und einer Gewindemutter 9 zur festen Anlage an der Sammelschiene 1 und einer an dieselbe anschließenden Sammelschiene 10 einerseits sowie an der Kontaktfläche 5 des Kontakts 3 andererseits gebracht sind. Die als Durchverbindung ausgeführte Verbindungsstelle zwischen den Sammelschienen 1 und 10 und dem Kontakt 3 ist in einen Stecker 11 aus Isoliermaterial eingebettet. Der Stecker 11 ist mit einer Kappe verschlossen und über eine Klemme 12 an Erde bzw. Masse angeschlossen. Die Einbettung in einen Stecker 11 gilt auch dann, wenn die Verbindungsstelle als Endverbindung ausgeführt ist, so wie es in Fig. 1 links dargestellt ist.

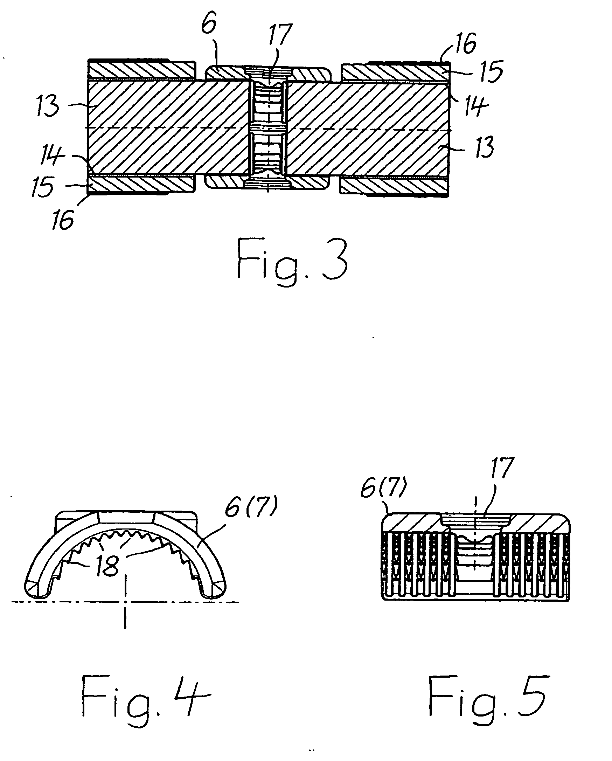

Eine als Durchverbindung ausgeführte Verbindungsstelle geht aus Fig. 3 in gegenüber Fig. 1 vergrößerter Darstellung hervor:

Die Sammelschienen 1 und 10 bestehen bei dieser Ausführungsform aus Abschnitten eines Mittelspannungskabels - im folgenden kurz als "Kabel" bezeichnet - mit einem Aluminiumleiter 13, das in herkömmlicher Technik kontinuierlich gefertigt worden ist. Der Aluminiumleiter 13 des Kabels ist von einer als Leiterglättung dienenden halbleitenden Schicht 14 umgeben, über welcher eine Isolierung 15 angebracht ist. Diese wiederum ist von einer der Feldsteucrung dienenden äußeren Leitschicht 16 umgeben. Die Schichten 14, 15 und 16 werden bei der Herstellung des Kabels in einem Arbeitsgang auf den Aluminiumleiter 13 aufgebracht. Sie bilden zusammen mit demselben die Seele des Kabels.

Die Sammelschienen 1 bzw. 10 sind entsprechend Fig. 3 Abschnitte der beschriebenen Seele des Kabels, Zur Durchverbindung der beiden Sammelschienen 1 und 10 werden die Schichten 14, 15 und 16 an deren Enden entfernt, so daß die Aluminiumleiter 13 freiliegen. Im Stecker 11 wird dann der aus den beiden Halbschalen 6 und 7 bestehende Klemmkörper zusammen mit der Gewindestange 8 positioniert. Die beiden Sammelschienen 1 und 10 werden danach in den Stecker 11 eingesteckt und bis annähernd zur Anlage an der Gewindestange 8 aneinander angenähert. In dieser Position werden sie mit geradlinigem Verlauf abgestützt. Anschließend wird die Gewindemutter 9 auf die Gewindestange 8 aufgeschraubt und so weit fest angezogen, bis die Halbschalen 6 und 7 fest an den Aluminiumleitern 13 anliegen. Dabei wird gleichzeitig die Halbschale 7 fest an die Kontaktfläche 5 gepreßt.

Jede der beiden Halbschalen 6 und 7 hat an ihrer inneren Oberfläche beiderseits einer Bohrung 17 zum Durchführen der Gewindestange 8 spitz zulaufende Vorsprünge 18. Die Spitzen der Vorsprünge 18 weisen alle quasi parallel zueinander in die gleiche Richtung, und zwar in Richtung der im zu bildenden Klemmkörper jeweils gegenüber liegenden Halbschale. Es ist dadurch sichergestelit, daß alle Vorsprünge 18 bei fest angezogener Gewindemutter 9 in den Aluminiumlelter 13 eindringen.

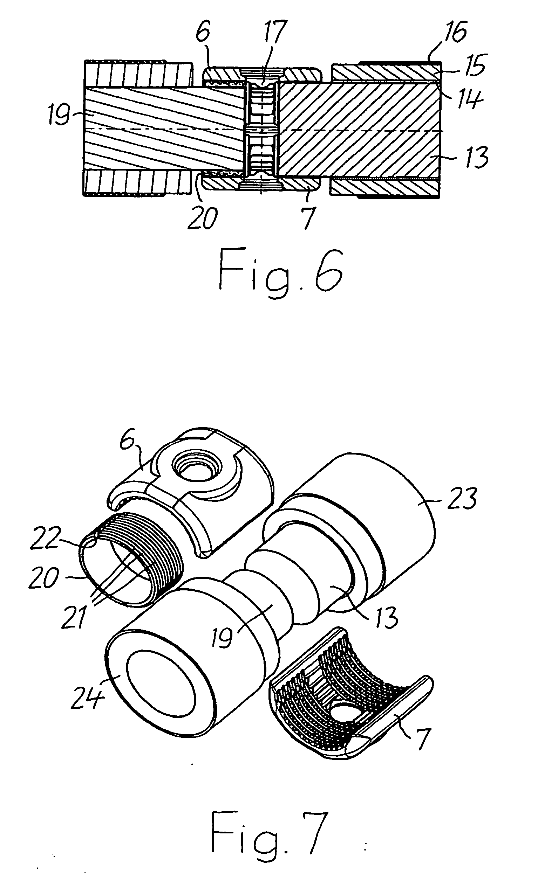

Die Anordnung ist auch dann einsetzbar, wenn eine Sammelschiene mit einem Aluminiumleiter 13 gemäß Fig. 6 mit einer aus einer Kupferstange 19 bestehenden Sammelschiene verbunden werden soll. Da die Kupferstange 19 wegen der besseren Leitfähigkeit des Kupfers gegenüber Aluminium einen kleineren Durchmesser als der Aluminiumleiter 13 hat, wird vor der Montage des Klemmkörpers ein den Durchmesserunterschied ausgleichender metallischer Ring 20 auf die Kupferstange 19 aufgeschoben. Dessen Innendurchmesser entspricht dem Durchmesser der Kupferstange 19, während sein Außendurchmesser dem Durchmesser des Aluminiumleiters 13 entspricht. In der äußeren Umfangsfläche des Rings 20 sind auf seiner ganzen axialen Breite in Umfangsrichtung umlaufende Rillen 21 angebracht, in welche die Vorsprünge 18 der Halbschalen 6 und 7 in montierter Position eingreifen. Der Ring 20 kann außerdem einen axial durchgehenden Schlitz 22 aufweisen, damit er beim Festziehen der Gewindemutter 9 gegebenenfalls bis zur satten Anlage an der Kupferstange 19 zusammengedrückt werden kann.

Die für den Zusammenbau der Anordnung nach Fig. 6 benötigten Teile gehen als Einzelteile aus Fig. 7 hervor. Dabei sind von den beiden Sammelschienen nur Endstücke 23 und 24 dargestellt. Beim Herstellen der Verbindung werden zunächst die beiden Halbschalen 6 und 7 des Klemmkörpers zusammen mit dem Ring 20 in den oben offenen Stecker 11 eingeschoben, bis die Halbschale 7 an einer Kontaktfläche 5 anliegt. Die Halbschalen 6 und 7 werden dabei im Stecker 11 eng geführt. Danach wird die Gewindestange 8 in die Kontaktfläche 5 eingeschraubt. Anschließend werden die beiden Sammelschienen 1 und 10 in den Stecker 1 eingesteckt und in axialer Richtung weitergeschoben, bis sie in die Halbschalen 6 und 7 bzw. den Ring 20 eingreifen. In der Endposition berühren ihre Stirnflächen die Gewindestande 8 annähernd. Die Verbindung wird dann durch Aufschrauben der Gewindemutter 9 auf die Gewindestange 8 und deren Festziehen fertiggestellt. Beim Festziehen der Gewindemutter 9 dringen die Vorsprünge 18 der beiden Halbschalen 6 und 7 in den Aluminiumleiter 13 und die Rillen 21 des Rings 20 ein, der - wie schon erwähnt - gegebenenfalls zusammengedrückt wird. Die Halbschale 7 wird fest an die Kontaktfläche 5 gepreßt. In den Hohlraum des Steckers 11 oberhalb der Gewindemutter 9 kann zur Stabilisierung ein Adapter 25 aus Isoliermaterial eingesetzt werden. Abschließend wird der Stecker 11 mittels der Kappe K verschlossen.

## Patentansprüche

1. Anordnung zum elektrisch leitenden Verbinden von Schaltfeldern einer Mittelspannungsanlage bei welcher aus jedem Schaltfeld eine elektrische Kontaktfläche herausgeführt ist, bei welcher zwischen je zwei Schaltfeldern eine mit deren Kontaktflächen elektrisch leitend verbundene Sammelschiene angeordnet ist, bei welcher jeweils zwei Sammelschienen miteinander und mit der jeweiligen Kontaktfläche eines Schaltfeldes elektrisch leitend verbunden sind, und bei welcher zum Verbinden zweier Sammelschienen (1.10) jeweils ein aus zwei Halbschalen (6,7) bestehender Klemmkörper dient, dessen Halbschalen (6,7) in Montageposition mittels einer Schraubverbindung auf zwei einander gegenüber liegenden Seiten der zu verbindenden Sammelschienen (1, 10) fest an denselben anliegen, **dadurch gekennzeichnet,**
- **daß** mindestens eine der Sammelschienen (1,10) aus einem Abschnitt eines mit einem Aluminiumleiter (13) ausgerüsteten Mittelspannungskobels besteht und
- **daß** die Halbschalen (6.7) mit im wesentlichen parallel zueinander verlaufenden, spitz zulaufenden Vorsprüngen (18) ausgerüstet sind, die jeweils in Richtung der gegenüber liegenden Halbschale weisen und in Montageposition, in welcher eine der Halbschalen fest an die zugehörige Kontaktfläche (5) eines Schaltfeldes (2) angepreßt ist, zumindest in den Aluminiumleiter (13) eingedrungen sind.

2. Anordnung nach Anspruch 1, **dadurch gekennzeichnet, daß** beim Verbinden von zwei Sammelschienen mit unterschiedlichem Durchmesser auf die Sammelschiene mit dem kleineren Durchmesser ein an seiner Umfangsfläche auf seiner ganzen axialen Breite mit mehreren, in Umfangsrichtung umlaufenden Rillen (21) versehener metallischer Ring (20) aufgesetzt ist, dessen Außendurchmesser dem Durchmesser der Sammelschiene mit dem größeren Durchmesser entspricht.

3. Anordnung nach Anspruch 2, **dadurch gekennzeichnet, daß** der Ring (20) einen axial durchgehenden Schlitz (22) aufweist.

## Claims

1. A device for the electrical connection of switchgear vessels of a medium voltage installation, comprising contact areas which are provided at each switchgear vessel a bus bar extensing between two switchgear vessels respectively which is electrically connected to the respective contact area, in which device respectively two bus bars are electrically connected to each other and to the respective contact area of a switchgear vessel and in which for the connection of two bus bars (1,10) a clamping body is used which comprises two half shells (6,7) which in mounting position firmly abut to the bus bars (1,10) on two opposite sides by use of a screw connection, **characterized in**
- **that** at least one of the bus bars (1,10) is a piece from a medium voltage cable having an aluminium conductor (13) and
- **that** the half shells (6,7) have protrusion which all project parallel to each other in the same direction and penetrate at least into the aluminium conductor (13) in mounting position, in which one of the half shells is pressed firmly to the corresponding contact are (5) of a switchgear vessel (2).

2. A device according to claim 1, **characterized in that** for the connection of two bus bars having different diameters a metallic ring (20) is positioned on the bus bar with the smaller diameter, which has on its outer surface on its total axial width a plurality of circular grooves (21) and the outer diameter of which corresponds to the diameter of the bus bar with the greater diameter.

3. A device according to claim 2, **characterized in that** the ring (20) has an axialy extending continuous slot (22).

## Revendications

1. Système pour relier de manière -électriquement conductrice des panneaux de commutation d'une installation à moyenne tension, dans lequel une surface de contact déborde de chaque panneau de commutation et un rail collecteur relié de manière électriquement conductrice à ces surfaces de contact relie les deux panneaux de commutation, deux rails collecteurs étant reliés de manière électriquement conductrice l'un à l'autre et à chaque surface de contact d'un panneau de commutation, un corps de serrage constitué de deux demi-coquilles (6, 7) servant à relier deux rails collecteurs (1, 10), une liaison vissée permettant en position de montage d'appliquer fermement les demi-coquilles (6, 7) sur deux côtés mutuellement opposés des rails collecteurs (1, 10) à relier,
**caractérisé en ce que**
au moins un des rails collecteurs (1, 10) est constitué d'un tronçon de câble à moyenne tension doté d'un conducteur en aluminium (13) et
**en ce que** les demi-coquilles (6, 7) sont dotées de saillies (18) qui s'étendent essentiellement en parallèle et se terminent en pointe, toutes tournées en direction de la demi-coquille opposée et enfoncées en position de montage, l'une des demi-coquilles étant repoussée fermement contre la surface de contact (5) associée d'un panneau de commutation (2) et au moins dans le conducteur en aluminium (13).

2. Système selon la revendication 1, **caractérisé en ce que** lorsque l'on relie deux rails collecteurs de différents diamètres, on place sur le rail collecteur de plus petit diamètre un anneau métallique (20) dont toute l'extension axiale de la surface périphérique est dotée de plusieurs rainures périphériques (21) et dont le diamètre extérieur correspond au diamètre du rail collecteur qui présente le plus grand diamètre.

3. Système selon la revendication 2, **caractérisé en ce que** l'anneau (20) présente une fente axiale continue (22) .
